# EUROPEAN PATENT APPLICATION

(11) **EP 4 503 384 A1**
(43) Date of publication of application: **05.02.2025**
(21) Application number: 23315304.8
(22) Date of filing: 03.08.2023
(51) Int. Cl.: H02J 50/10, H02J 50/40, H02J 7/00

(54) **AIRCRAFT COMPONENT HAVING AN INTEGRATED ELECTRICAL SYSTEM**

(71) Applicant: Airbus S.A.S., 31700 Blangnac (FR)
(72) Inventor: Friedberger, Alois, 31700 Blagnac (FR); Ghosh, Priyanka, 31700 Blagnac (FR); Chassaigne, Didier, 31700 Blagnac (FR)
(74) Representative: KASTEL Patentanwälte PartG mbB

(57) **Abstract**

In order to improve electrical systems of aircraft, such as passenger aircraft or UAVs, the invention proposes an aircraft component (12) that includes a wireless power transfer module (16). The wireless power transfer module (16) is integrated into a body portion (40), for example a tray. An electrical apparatus (20), such as an integrated energy storage (32), is electrically connected to the wireless power transfer module (16) to be charged by an external power supply (24).

## Description

The invention relates to an aircraft component. The invention further relates to a wireless power transmission arrangement and an aircraft.

Modern aircraft include a variety of electrical systems that can range from systems important to aircraft control to passenger convenience.

Recently, the integration of energy storage into the aircraft structure was developed, examples of which can be found in EP 3 222 514 B1, EP 4 122 816 A1, EP 4 051 579 A1, EP 3 561 909 A1 and EP 4 040 635 A1.

The integrated energy storage is typically supplied using plugs and connectors as well as cables or conductors within the structure.

It is the object of the invention to improve electrical systems in aircraft, preferably in unmanned aerial vehicles and passenger aircraft.

The object is achieved by the subject-matter of the independent claims. Preferred embodiments are subject-matter of the dependent claims.

The invention provides an aircraft component, preferably a structural component or an interior component, the aircraft component comprising:
- a body portion;
- a wireless power transfer module that is integrated in the body portion and is configured for wirelessly transmitting and/or receiving electrical power by means of an alternating electromagnetic field; and
- at least one electrical apparatus being electrically coupled to the wireless power transfer module to supply or be supplied with the electrical power through the wireless power transfer module.

Preferably, the wireless power transfer module comprises a coil member that is embedded in the body portion and electrically coupled to the electrical apparatus.

Preferably, the wireless power transfer module comprises a plurality of coil members that is electrically coupled in parallel, and each coil member is electrically coupled to one electrical apparatus.

Preferably, the wireless power transfer module comprises a plurality of coil members being electrically coupled in series, and at least two coil members are electrically coupled to one electrical apparatus.

Preferably, the wireless power transfer module comprises a plurality of coil members where some of the coil members are electrically coupled in series and some of the coil members are electrically coupled in parallel, and each electrical apparatus is electrically coupled to both parallel and series coil members.

Preferably, each coil member is formed by litz wire that is embedded in the body portion or wherein each coil member is formed by a conductive path on a foil member that embedded in the body portion.

Preferably, the wireless power transfer module comprises at least one magnetic core that is integrated in the body portion and at least one coil member that encircles the magnetic core.

Preferably, the coil member has a circle-like or a rectangular outer contour.

Preferably, the coil member is formed by a conductive trace on a substrate.

Preferably, the coil member is formed by a conductive trace on a substrate. Preferably, the conductive trace has a first trace portion and a second trace portion. Preferably, the first trace portion is disposed on a first substrate surface or first intermediate layer of the substrate. Preferably, the second trace portion is formed on a second substrate surface or second intermediate layer of the substrate that are different from the respective first substrate surface and first intermediate layer. Preferably, the first trace portion and the second trace portion electrically coupled in series or in parallel.

Preferably, the coil member being formed by a plurality of conductive traces on a substrate. Preferably, the conductive traces are pairwise electrically isolated. Preferably, each conductive trace has a first trace portion and a second trace portion, wherein the first trace portion is disposed on a first substrate surface or first intermediate layer of the substrate and the second trace portion is formed on a second substrate surface or second intermediate layer of the substrate that are different from the respective first substrate surface and first intermediate layer. Preferably, the first trace portion and the second trace portion electrically coupled in series, and each conductive trace crosses another conductive trace in different layers forming a braid-like structure.

Preferably, the wireless power transfer module comprises an electrical switch arrangement configured for selectively coupling the coil members in parallel, in series, or decoupling one or more coil members from other coil members.

Preferably, the wireless power transfer module comprises an AC-DC-converter configured for converting the wirelessly received electrical power to DC-power for supplying the electrical apparatus.

Preferably, the wireless power transfer module comprises at least one electrical switch configured for selectively coupling or decoupling the wireless power transfer module to each electrical apparatus.

Preferably, the wireless power transfer module comprises a controller configured for controlling the wireless power transfer module based on a sensor input.

Preferably, the controller is configured to control the output power of the wireless power transfer module in accordance with a power demand of the electrical apparatus.

Preferably, the controller is configured to control the output power by selectively electrically coupling or decoupling a number of coil members to its output.

Preferably, the wireless power transfer module comprises a current sensor that is configured to measure the current demand of the electrical apparatus.

Preferably, each electrical apparatus comprises an energy storage apparatus configured for storing electrical energy. Preferably, each electrical apparatus comprises a DC-DC converter configured for adapting received DC-power to be used in the electrical apparatus. Preferably, each electrical apparatus comprises a flight related sensor that is configured for measuring flight data indicative of the flight state of the aircraft. Preferably, each electrical apparatus comprises a geoinformation sensor that is configured for measuring geoinformation data that is indicative of the ground environment below the aircraft. Preferably, each electrical apparatus comprises an environmental sensor that is configured for measuring environmental data that is indicative of the environment around the aircraft. Preferably, each electrical apparatus comprises a combined sensor that is configured to act as a combination of any of the flight related sensor, the geoinformation sensor, and the environmental sensor.

Preferably, the aircraft component is an interior component of a passenger cabin of an aircraft. Preferably, the body portion is configured as a tray that is movable between a stowed position, in which the wireless power transfer module is deactivated, and an operating position, in which each wireless power transfer module is activated to allow wireless charging of a personal device deposited on the tray, wherein preferably the wireless power transfer module is integrated in the tray.

The invention provides a wireless power transfer arrangement comprising a preferred aircraft component and a second wireless power transfer module that is configured to be inductively coupled to the wireless power transfer module to transmit electrical power thereto.

The invention provides an aircraft, preferably a UAV, comprising a preferred aircraft component and/or a preferred wireless power transfer arrangement.

Preferably, the aircraft comprises an electrical propulsion system, and the electrical apparatus is configured for supplying electrical power to the electrical propulsion system.

In some embodiments an aircraft component, preferably a structural component or an interior component comprises a body portion; a wireless power transfer module being configured for wirelessly transmitting and/or receiving electrical power by induction; and at least one electrical apparatus being electrically coupled to the wireless power transfer module to supply or be supplied with the electrical power through the wireless power transfer module.

In some embodiments the wireless power transfer module is integrated into the body portion. In some embodiments each electrical apparatus is integrated onto the body portion.

In some embodiments the wireless power transfer module comprises at least one coil member being electrically coupled to the electrical apparatus.

In some embodiments the wireless power transfer module comprises a plurality of coil members being electrically coupled in parallel. Preferably, each coil member is electrically coupled to one electrical apparatus.

In some embodiments the wireless power transfer module comprises a plurality of coil members being electrically coupled in series. Preferably, at least two coil members are electrically coupled to one electrical apparatus.

In some embodiments each electrical apparatus comprises an AC-DC-converter configured for converting the electrical power received by induction to DC-power.

In some embodiments each electrical apparatus comprises an energy storage apparatus and/or a sensor.

In some embodiments the wireless power transfer module comprises at least one electrical switch configured for selectively coupling or decoupling the wireless power transfer module each electrical apparatus.

In some embodiments the wireless power transfer module comprises an electrical switch arrangement configured for selectively coupling the coil members in parallel, in series, or decoupling one or more coil members from other coil members.

In some embodiments the aircraft component is a structural component of an aircraft, preferably of an unmanned aerial vehicle.

In some embodiments the electrical apparatus comprises a controller configured for controlling the wireless power transfer module based on a sensor input.

In some embodiments the aircraft component is an interior component of a passenger cabin of an aircraft.

In some embodiments the body portion is configured as a tray that is movable between a stowed position and an operating position, wherein the wireless power transfer module is integrated in the tray to allow charging of a personal device.

In some embodiments the wireless power transfer module is energized in the operating position and deenergized in the stowed position.

In some embodiments high power transfer for wireless charging of a UAV is possible. In some embodiments embedding of a serial network foil with coils in thermoplastic composite to simplify recycling is possible. In some embodiments the coils can be integrated into the structural material, e.g., the secondary structure. In some embodiments the structural material is or includes thermoplastic material. In some embodiments a structural embedding of ferrite in the secondary composite structure is possible. In some embodiments the realisation of coils on PEI foil material is possible. The PEI foil is particularly suitable for bonding to epoxy resins. In some embodiments the use of switch connectors is proposed to supply the coils after activation by the passenger. In some embodiments a low power transfer is proposed, e.g., by serial connection of several coils allowing to transfer power to receivers at different locations.

In some embodiments a support, e.g. foil, with sensors, electronics, wireless data transfer, or energy storage can be installed on the aircraft. In some embodiments inductive resonant charging can be performed by placing a primary coil in proximity on demand, e.g., when aircraft is on ground. In some embodiments the coils can be arranged in the aircraft wing, e.g. along a spar.

In some embodiments the transferred power can be tapped along the length of the coil to supply inaccessible loads. The coils may be connected in series or parallel, preferably depending on load configuration. The coils may be used to power an active load (e.g. sensor) or charge a storage element for future use. Preferably, a closed loop control implementation is in place.

In some embodiments, depending on the load demand, the coil configuration can be switched by detecting the resonant current in the coils, so that their current rating is respected.

In some embodiments the system is configured for opposite operation. Preferably, distributed coils are disposed in floor panels or in the cabin serving as primary coils to transfer power to individual passenger seats, e.g. to charge mobile devices. In some embodiments, the support foil is equipped with switches for each coil. In some embodiments, manual switching is possible based on user needs. The coils may be integrated into cabin lining panels offering wireless power supply to passengers' personal devices. In some embodiments passengers can move down their tray thereby activating the switch to charge personal devices by wireless power transfer.

In some embodiments the circuits can be formed by directly printing (e.g. by inkjet, aerosol jet, cold spray, screen printing or a combination thereof) of coils and dielectric material on ferroelectric material. An additive manufacturing approach may save material resources, simplify the manufacturing process, allow for a reduction of installation time and/or allow weight savings.

Embodiments of the invention are described in more detail with reference to the accompanying schematic drawings that are listed below.
Fig. 1 depicts a first embodiment of a wireless power transfer arrangement;
Fig. 2 depicts a second embodiment of a wireless power transfer arrangement;
Fig. 3 depicts a third embodiment of a wireless power transfer arrangement;
Fig. 4 depicts a fourth embodiment of a wireless power transfer arrangement; and
Fig. 5 depicts a fifth embodiment of a wireless power transfer arrangement.

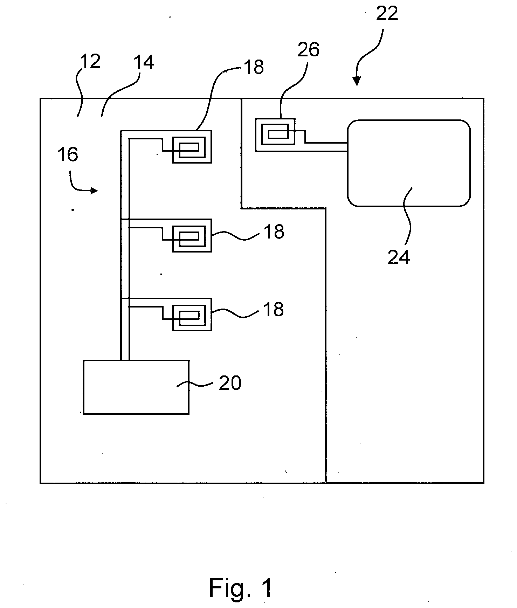

Referring to Fig. 1, a wireless power transfer arrangement 10 is depicted. The wireless power transfer arrangement 10 comprises an aircraft component 12. The aircraft component 12 may be configured as a structural element of an aircraft (not depicted). Examples for structural elements are frames, stringers, stiffening elements, skin panels and other members that are typically part of the primary or secondary structure of the aircraft.

The aircraft component 12 may be an interior component of the aircraft, such as a cabin monument, a passenger seat and accessories, a galley, a bathroom, an overhead compartment, a cabin separator and/or cabin panels.

The aircraft component 12 comprises a body portion 14 that is preferably configured as a laminate structure. The body portion 14 may be manufactured from fibre reinforced plastic or other composite materials.

The aircraft component 12 comprises a wireless power transfer module 16. The wireless power transfer module 16 is at least partially integrated in the body portion 14. The wireless power transfer module 16 is configured for wirelessly transmitting and/or receiving electrical power by means of an alternating electromagnetic field.

The wireless power transfer module 16 comprises at least one coil member 18. As indicated in Fig. 1, a plurality of coil members 18 can be electrically coupled together in parallel.

The aircraft component 12 further comprises an electrical apparatus 20. The electrical apparatus 20 may be integrated into the body portion 14. It is also possible that the electrical apparatus 20 is arranged in the vicinity of the body portion 14 but not necessarily part of it. The electrical apparatus 20 may have various configurations as will be described later. The electrical apparatus 20 is electrically coupled to the coil members 18 of the wireless power transfer module 16.

The wireless power transfer arrangement 10 further comprises a second wireless power transfer module 22 that is typically not part of the aircraft component 12.

The second wireless power transfer module 22 includes a power supply 24. The power supply 24 may be a portable power supply based on batteries, capacitors or a wired power supply that can be connected to an electrical power grid.

The second wireless power transfer module 22 further includes at least one second coil member 26. The second coil member 26 is electrically coupled to the power supply 24 to be energized with an alternating electrical current.

In general, the wireless power transfer arrangement 10 works as follows. The electrical apparatus 20 may be chosen from a group of configurations including sensors, electronics, wireless data transfer modules, or energy storage that is installed on an aircraft. When the aircraft is on the ground, the aircraft component 12 is available for the second wireless power transfer module 22. The second wireless power transfer module 22 is brought close to the wireless power transfer module 16, specifically the coil members 18. The power supply 24 energizes the second coil member 26 with an alternating electrical current, which causes the second coil member 26 to emit an alternating electromagnetic field. This electromagnetic field couples to the coil members 18 and generates an alternating electrical current within the wireless power transfer module 16. This current can be used to supply the electrical apparatus 20 with electrical energy without any direct contact and in particular, without opening the aircraft or removing the aircraft component 12. As a result, it is possible to supply hidden electrical apparatus 20 with electrical power.

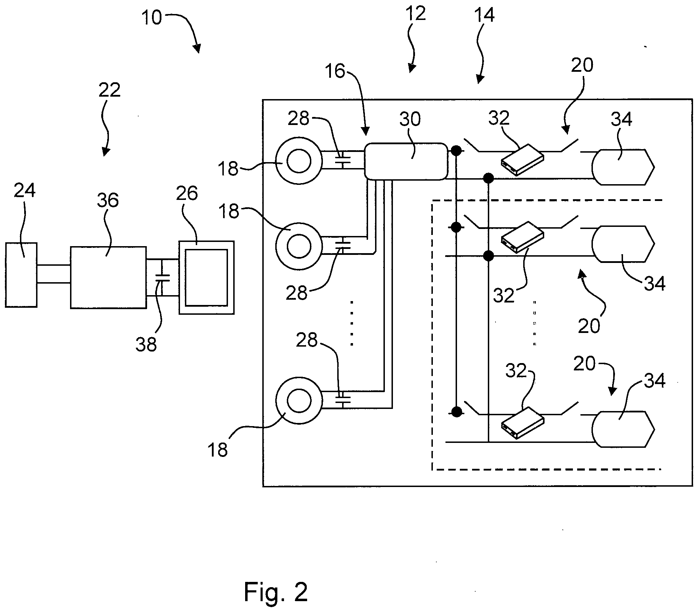

Referring to Fig. 2, a second embodiment of the wireless power transfer arrangement 10 is described in more detail. The second embodiment of the wireless power transfer arrangement 10 is only described insofar as it differs from the first embodiment.

The wireless power transfer module 16 comprises a plurality of coil members 18 that are connected in series or in parallel. Furthermore, each coil member 18 may include a capacitor 28 between its two leads.

The wireless power transfer module 16 comprises an AC/DC converter 30 that is electrically coupled to the coil members 18. Examples for a suitable AC/DC converter 30 are an active or passive rectifier. The wireless power transfer arrangement 10 comprises a plurality of electrical apparatus 20. Each electrical apparatus 20 includes an energy storage 32, e.g., a battery and a sensor 34. Each electrical apparatus 20 is connected to the AC/DC converter 30. Specifically, each energy storage 32 is connected to the AC/DC converter 30 for charging. Each sensor 34 is connected to the energy storage 32 to be supplied with electrical energy. Furthermore, it is possible that the sensor 34 has a data connection to the coil member 18 so that while the sensor 34 is powered and measuring, the detected results can be transmitted via the coil member 18.

The sensor 34 may be a flight related sensor that is configured for measuring flight data indicative of the flight state of the aircraft. Examples for flight related sensors including pitot tubes, angle of attack sensors, sensors measuring the deflection of control surfaces or the extension of high-lift devices, and the like.

The sensor 34 may be chosen as a geoinformation sensor that is configured for measuring geoinformation data that is indicative of the ground environment below the aircraft. Such sensors include laser sensors, cameras (infrared, UV ,visual), or similar kinds.

The sensor 34 may also be chosen from a group environmental sensors that are configured for detecting the environment around the aircraft. Environmental sensors include radar, wind shear sensors (by means of laser Doppler effect, for example), temperature sensors, humidity sensors and pressure sensors for static air pressure.

It is also possible that the sensor 34 is a combined sensor that is capable of a combination of the aforementioned sensor types.

The second wireless power transfer module 22 may also include a DC/AC converter 36 that is connected to one or more second coil members 26. An example for a suitable DC/AC converter 36 is an inverter. The second coil member 26 may also include a second capacitor 38 that is connected between its leads.

The electrical connection and thus charging of the energy storage 32 functions similar to the first embodiment. The second wireless power transfer module 22 is brought close to the wireless power transfer module 16, specifically the coil members 18. The DC/AC converter 36 is supplied with direct current, for example from the power supply 24 and converts the direct current to alternating current. The alternating current is fed to the second coil member 26 and generates an alternating electromagnetic field. The alternating electromagnetic field couples to the coil members 18 which generates an alternating current in the wireless power transfer module 16. The alternating current is fed to the AC/DC converter 30 which converts the alternating current to a direct current that is suitable for charging the energy storage 32.

It is also possible that during this connection, e.g., during charging of the energy storage 32, the sensor 34 transmits stored data using the wireless power transfer module 16 and the second wireless power transfer module 22. The data so transmitted, for example flight data, geoinformation data and/or environmental data, can then be extracted for further analysis.

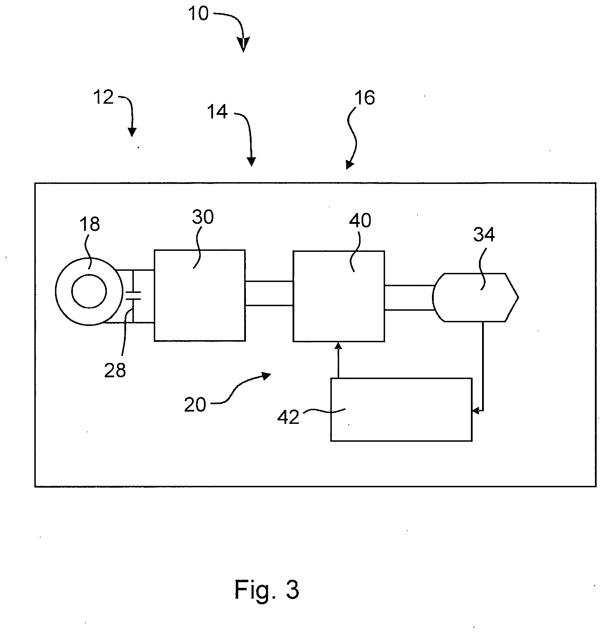

Referring to Fig. 3, a third embodiment of a wireless power transfer arrangement 10 is described in more detail. The wireless power transfer arrangement 10 is similarly configured to the second embodiment. In additional to the second embodiment, the electrical apparatus 20 includes a DC/DC converter 40. The DC/DC converter 40 is connected to a sensor 34 that may be of the type that is very sensitive to variations in input voltage, for example. The electrical apparatus 20 further includes a controller 42 that is connected to the sensor 34 and receives its supply voltage as an input. The controller 42 is operatively coupled to the DC/DC converter 40 for controlling the output voltage.

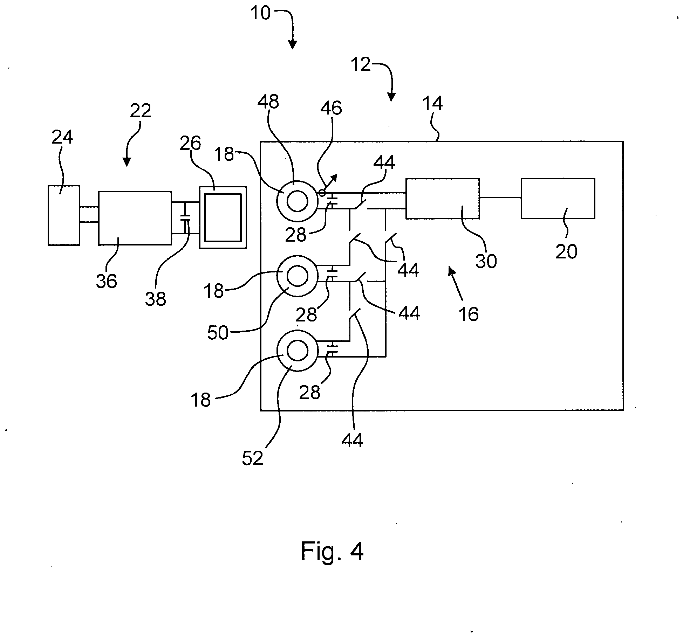

Referring to Fig. 4, a fourth embodiment wireless power transfer arrangement 10 is depicted. The wireless power transfer arrangement 10 includes a plurality of switches 44 which are arranged such that the configuration of coil members 18 can be changed, i.e. whether the respective coil member 18 can supply the electrical apparatus 20 or not.

In the following, the function of the fourth embodiment is described in more detail. When the second wireless power transfer module 22 is close to the wireless power transfer module 16 the former transfers power to the wireless power transfer module 16. A current sensor 46 may be arranged on a lead of a first coil member 48. If the current sensor 46 determines the current in the first coil member 48 to be below a predetermined first threshold, e.g., 3 A, then only the first coil member 48 is active to supply the electrical apparatus 20.

In response to the current sensor 46 detecting the current to exceed the predetermined first threshold, the switches 44 are opened and closed such that the first coil member 48 and the second coil member 50 are coupled in series and together supply the electrical apparatus 20. This configuration is active until a predetermined second threshold which is greater than the predetermined first threshold, e. g., 5 A, is exceeded.

Upon the current sensor 46 detecting that the current exceeds the predetermined second threshold, the switches 44 are opened and closed such that the first and second coil members 48, 50 are connected in series with a third coil member 52 to supply the electrical apparatus.

It should be noted that while the fourth embodiment was described with respect to three coil members, that any sensible number of coil members can be used in this manner. In other words, it is possible to have just two coil members 18 or more than three coil members 18 depending on the design of the aircraft component 12 and/or the electrical apparatus. Furthermore, it is possible to introduce fewer or more thresholds depending on the design of the electrical apparatus 20. Also it is possible that instead of just one coil being added upon crossing a threshold that two or more coils are added in order to meet the power demand.

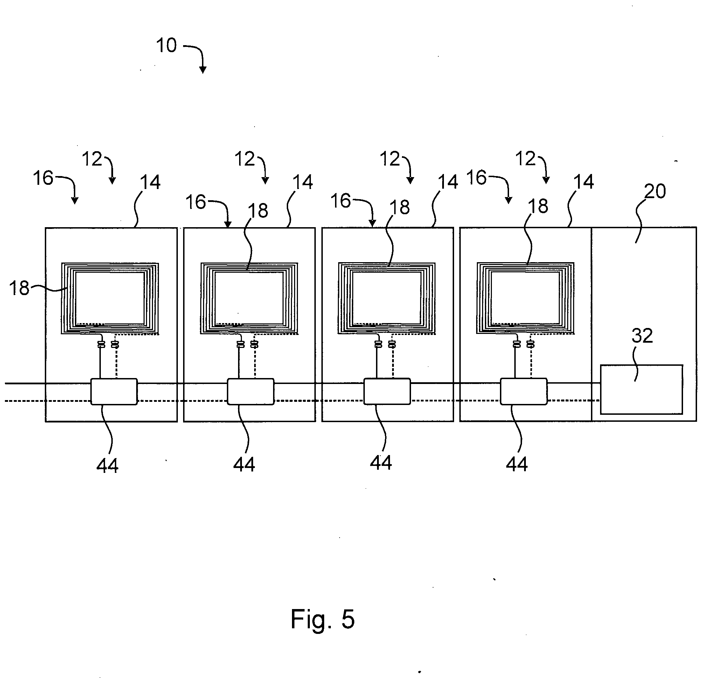

Referring to Fig. 5, a fifth embodiment of the wireless power transfer arrangement 10 is described in more detail. In this configuration, the aircraft component 12 is preferably configured as a passenger seat having an integrated passenger tray or other surface to which a passenger has access.

The body portion 14, which includes the coil member 18 is preferably formed as a passenger tray that can be stowed and deployed by flipping between a vertical and horizontal position. The body portion 14 is operatively coupled to a switch 44. This coupling can be mechanical, for example. The switch 44 is electrically connected to the electrical apparatus 20, for example the energy storage 32.

Upon flipping the body portion 14 from the stowed vertical position to the deployed horizontal position, the switch 44 is activated and the respective coil member 18 is energized by the energy storage 32. Now a passenger can charge his mobile device, for example, by putting it onto the body portion 14, specifically close to coil member 18. The respective zone may be marked on the body portion 14 for the users convenience.

In order to improve electrical systems of aircraft, such as passenger aircraft or UAVs, the invention proposes an aircraft component (12) that includes a wireless power transfer module (16). The wireless power transfer module (16) is integrated into a body portion (40), for example a tray. An electrical apparatus (20), such as an integrated energy storage (32), is electrically connected to the wireless power transfer module (16) to be charged by an external power supply (24).

### List of reference signs:

- 10: wireless power transfer arrangement
- 12: aircraft component
- 14: body portion
- 16: wireless power transfer module
- 18: coil member
- 20: electrical apparatus
- 22: second wireless power transfer module
- 24: power supply
- 26: second coil member
- 28: capacitor
- 30: AC/DC converter (rectifier)
- 32: energy storage
- 34: sensor
- 36: DC/AC converter (inverter)
- 38: second capacitor
- 40: DC/DC converter
- 42: controller
- 44: switch
- 46: current sensor
- 48: first coil member
- 50: second coil member
- 52: third coil member

## Claims

1. An aircraft component (12), preferably a structural component or an interior component, the aircraft component (12) comprising:
- a body portion (14);
- a wireless power transfer module (16) that is integrated in the body portion (14) and is configured for wirelessly transmitting and/or receiving electrical power by means of an alternating electromagnetic field; and
- at least one electrical apparatus (20) being electrically coupled to the wireless power transfer module (16) to supply or be supplied with the electrical power through the wireless power transfer module (16).

2. The aircraft component (12) according to claim 1, wherein the wireless power transfer module (16) comprises any of the following features:
a) a coil member (18) that is embedded in the body portion (14) and electrically coupled to the electrical apparatus (20);
b) a plurality of coil members (18) that is electrically coupled in parallel, and each coil member (18) is electrically coupled to one electrical apparatus (20);
c) a plurality of coil members (18) being electrically coupled in series, and at least two coil members (18) are electrically coupled to one electrical apparatus (20);
d) a plurality of coil members (18) where some of the coil members (18) are electrically coupled in series and some of the coil members (18) are electrically coupled in parallel, and each electrical apparatus (20) is electrically coupled to both parallel and series coil members (18).

3. The aircraft component (12) according to claim 2, wherein each coil member (18) is formed by litz wire that is embedded in the body portion (14) or wherein each coil member (18) is formed by a conductive trace on a substrate that is embedded in the body portion (14).

4. The aircraft component (12) according to claim 2 or 3, wherein the wireless power transfer module (16) comprises at least one magnetic core that is integrated in the body portion (14) and at least one coil member (18) that encircles the magnetic core.

5. The aircraft component (12) according to any of the claims 2 to 4, wherein the configuration of at least one coil member (18) is chosen from a group consisting of
- the coil member (18) having a circle-like or a rectangular outer contour; and/or
- the coil member (18) being formed by a conductive trace on a substrate; and/or
- the coil member (18) being formed by a conductive trace on a substrate, wherein the conductive trace has a first trace portion and a second trace portion, wherein the first trace portion is disposed on a first substrate surface or first intermediate layer of the substrate and the second trace portion is formed on a second substrate surface or second intermediate layer of the substrate that are different from the respective first substrate surface and first intermediate layer, wherein the first trace portion and the second trace portion electrically coupled in series or in parallel; and/or
- the coil member (18) being formed by a plurality of conductive traces on a substrate, wherein the conductive traces are pairwise electrically isolated, wherein the each conductive trace has a first trace portion and a second trace portion, wherein the first trace portion is disposed on a first substrate surface or first intermediate layer of the substrate and the second trace portion is formed on a second substrate surface or second intermediate layer of the substrate that are different from the respective first substrate surface and first intermediate layer, wherein the first trace portion and the second trace portion electrically coupled in series, and each conductive trace crosses another conductive trace in different layers forming a braid-like structure.

6. The aircraft component (12) according to any of the claims 2 to 5, wherein the wireless power transfer module (16) comprises an electrical switch arrangement configured for selectively coupling the coil members (18) in parallel, in series, or decoupling one or more coil members (18) from other coil members (18).

7. The aircraft component (12) according to any of the preceding claims, wherein the wireless power transfer module (16) comprises an AC-DC-converter (30) configured for converting the wirelessly received electrical power to DC-power for supplying the electrical apparatus (20).

8. The aircraft component (12) according to any of the preceding claims, wherein the wireless power transfer module (16) comprises at least one electrical switch configured for selectively coupling or decoupling the wireless power transfer module (16) to each electrical apparatus (20).

9. The aircraft component (12) according to any of the preceding claims, wherein the wireless power transfer module (16) comprises a controller (42) configured for controlling the wireless power transfer module (16) based on a sensor input.

10. The aircraft component (12) according to claim 9, wherein the controller (42) is configured to control the output power of the wireless power transfer module (16) in accordance with a power demand of the electrical apparatus (20).

11. The aircraft component (12) according to any of the preceding claims, wherein each electrical apparatus (20) comprises any of
- an energy storage apparatus configured for storing electrical energy; and/or
- a DC/DC converter (40) configured for adapting received DC-power to be used in the electrical apparatus; and/or
- a flight related sensor that is configured for measuring flight data indicative of the flight state of the aircraft; and/or
- a geoinformation sensor that is configured for measuring geoinformation data that is indicative of the ground environment below the aircraft; and/or
- an environmental sensor that is configured for measuring environmental data that is indicative of the environment around the aircraft; and/or
- a combined sensor that is configured to act as a combination of any of the flight related sensor, the geoinformation sensor, and the environmental sensor.

12. The aircraft component (12) according to any of the preceding claims, wherein the aircraft component (12) is an interior component of a passenger cabin of an aircraft, wherein the body portion (14) is configured as a tray that is movable between a stowed position, in which the wireless power transfer module (16) is deactivated, and an operating position, in which the wireless power transfer module (16) is activated to allow wireless charging of a personal device deposited on the tray, wherein preferably the wireless power transfer module (16) is integrated in the tray.

13. A wireless power transfer arrangement (10) comprising an aircraft component (12) according to any of the preceding claims and a second wireless power transfer module (22) that is configured to be inductively coupled to the wireless power transfer module (16) to transmit electrical power thereto.

14. An aircraft, preferably an UAV, comprising an aircraft component (12) according to any of the claims 1 to 12 and/or a wireless power transfer arrangement (10) according to claim 13.

15. The aircraft according to claim 14, comprising an electrical propulsion system, and the electrical apparatus (20) is configured for supplying electrical power to the electrical propulsion system.
